# EUROPÄISCHE PATENTANMELDUNG

(11) **EP 4 407 931 A1**
(43) Veröffentlichungstag der Anmeldung: **31.07.2024**
(21) Anmeldenummer: 23153393.6
(22) Anmeldetag: 26.01.2023
(51) Int. Cl.: H04L 9/40

(54) **BERECHTIGUNGSVERWALTUNGSSYSTEM ZUM BEREITSTELLEN VON PRODUKTIONSABHÄNGIGEN PRODUKTIONSBEFÄHIGUNGSDATEN**

(71) Anmelder: Siemens Aktiengesellschaft, 80333 München (DE)
(72) Erfinder: Falk, Rainer, 85586 Poing (DE)
(74) Vertreter: Siemens Patent Attorneys

(57) **Zusammenfassung**

Die Erfindung betrifft ein Berechtigungsverwaltungssystem, aufweisend:
- eine Empfangseinheit, ausgebildet eine Produktionsinformation zu empfangen, wobei die Produktionsinformation eine Information zu einem Stand einer Produktion und/oder einer Planung der Produktion umfasst, und
- eine Berechtigungseinheit, ausgebildet eine Berechtigungsinformation in Abhängigkeit der Produktionsinformation bereitzustellen,
wobei die Berechtigungsinformation ausgebildet ist, verschlüsselte Produktionsbefähigungsdaten zu entschlüsseln, wodurch entschlüsselte Produktionsbefähigungsdaten bereitgestellt werden,
wobei die entschlüsselten Produktionsbefähigungsdaten ausgebildet sind, eine Durchführung der Produktion zu befähigen.

Außerdem betrifft die Erfindung ein übergeordnetes System und ein zugehöriges Verfahren zum Bereitstellen einer Berechtigungsinformation in Abhängigkeit einer Produktionsinformation.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Berechtigungsverwaltungssystem zum Bereitstellen von produktionsabhängigen Produktionsbefähigungsdaten. Die Erfindung betrifft außerdem ein übergeordnetes System und ein zugehöriges Verfahren zum Bereitstellen einer Berechtigungsinformation in Abhängigkeit einer Produktionsinformation.

### Beschreibung des Stands der Technik

In einer Produktionsumgebung werden sensible Daten benötigt, insbesondere Rezepturen, Projektierungsdaten. Künftig werden Automatisierungsfunktionen nicht nur durch spezielle Hardware-basierte Geräte wie insbesondere eine speicherprogrammierbare Steuerung PLC (engl.: Programmable Logic Controller) realisiert, sondern als virtualisierte Automatisierungsfunktionen, die insbesondere als Container-Image, als Virtual-Machine-Image (VM-Image) oder als Binary vorliegen und auf einer offenen Compute-Plattform, insbesondere ein Shopfloor Compute Server oder Edge Compute Server, ausgeführt werden.

Dies führt dazu, dass sensible, für die Produktion benötigte Daten auf offene, relativ leicht zugängliche Plattformen geladen werden. Hierdurch entstehen für Angreifer ausnutzbare Schwachstellen.

Vom Standard OMA DRM (Digital Rights Management für Mobilgeräte) ist bekannt, dass die Lizenz-Information mit gewährten Content-Berechtigungen und ggf. dem Content Key zur Entschlüsselung des Contents (Audio, Video) dem Mobilgerät von einem DRM-Server übermittelt wird.

Es sind Enterprise-DRM-Systeme bekannt, bei dem in einer Firmenumgebungen Dokumente (z.B. Office-Dokumente) in verschlüsselter Form bereitliegen. Enterprise-DRM-Systeme werden auch als Enterprise Rights Management (ERM) Systeme bezeichnet. Ein Anwendungsprogramm erhält von einem EDRM-/ERM-Server den Schlüssel zum Entschlüsseln des Dokuments nur, wenn dessen Nutzer berechtigt ist (siehe z.B. Microsoft Rights Management Service.

Bei Windows Server ist bekannt, dass Virtual-Machine-Images verschlüsselt vorliegen. Ein Server erhält den Schlüssel zum Entschlüsseln eines VM-Images nur, wenn der Server integer und berechtigt ist (Windows Server Shielded VMs).

Allgemein ist eine Rollen-basierte Zugriffskontrolle (RBAC) bekannt. Ein Nutzer kann dabei in unterschiedlichen Rollen agieren. Es werden ihm nur diejenigen Berechtigungen gewährt, die der aktuell ausgeübten Rolle entsprechen. Bei RBAC im eigentlichen Sinn geht es nicht nur darum, die Berechtigungen eines Nutzers basierend auf seinen Aufgaben zu verwalten, sondern dass ein Nutzer abhängig von der Rolle, in der er gerade agiert, über unterschiedliche Berechtigungen verfügt. Es ist weiterhin bekannt, dass die Berechtigungen eines Nutzers von dem aktuellen Zustand eines Workflows abhängen können.

Die Aufgabe der Erfindung besteht darin, eine Lösung für einen verbesserten Umgang mit sensiblen Produktionsdaten bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Berechtigungsverwaltungssystem, aufweisend:
- eine Empfangseinheit, ausgebildet eine Produktionsinformation zu empfangen, wobei die Produktionsinformation eine Information zu einem Stand einer Produktion und/oder einer Planung der Produktion umfasst, und
- eine Berechtigungseinheit, ausgebildet eine Berechtigungsinformation in Abhängigkeit der Produktionsinformation bereitzustellen,
   wobei die Berechtigungsinformation für ein Entschlüsseln der verschlüsselten Produktionsbefähigungsdaten ausgebildet ist, wodurch entschlüsselte Produktionsbefähigungsdaten bereitgestellt werden,
   wobei die entschlüsselten Produktionsbefähigungsdaten ausgebildet sind, eine Durchführung der Produktion zu befähigen.

Es wird somit nach einer Ausführungsform vorgeschlagen, Berechtigungsinformation, insbesondere gewährten Berechtigungen oder Zugriffsrechte, für eine Produktion in einem Produktionssystem, insbesondere Automatisierungssystem, abhängig von der Produktionsinformation und damit abhängig von geplanten oder aktuell laufenden Produktionsschritten, im laufenden Produktionsbetrieb anzupassen.

Die Berechtigungsinformation wird nur dann bereitgestellt, wenn laut Produktionsplanung aktuell tatsächlich eine Produktion geplant ist oder angestoßen werden soll, und die Berechtigungsinformation für diese Produktion auf diesem Steuergerät oder auf dieser Ausführungsumgebung benötigt werden. Auf die sensiblen Daten in einer Produktionsumgebung kann somit nur im Klartext, d.h. in entschlüsselter Form, zugegriffen werden, soweit dies gemäß Produktionsplanung notwendig ist.

Das Berechtigungsverwaltungssystem, insbesondere ein Manufacturing Execution System (MES), und auch das Produktionsplanungssystem haben dadurch Einfluss darauf, welche Berechtigungsinformation und damit Zugriffsmöglichkeiten auf eine Produktion und/oder in einem Automatisierungssystem aktuell bestehen, insbesondere welche Zugriffsmöglichkeiten auf welche Produktionsbefähigungsdaten aktuell bestehen.

Eine Produktionsbefähigung und Durchführung der Produktion kann somit nur dann erfolgen, wenn laut Produktionsplanung ein entsprechender Produktionsauftrag und/oder Produktionsschritt tatsächlich zu bearbeiten ist.

Wenn nur die aktuell tatsächlich benötigten Berechtigungsinformation und damit Zugriffsrechte bestehen, wird die Missbrauchsgefahr und die Auswirkung von möglichen Angriffen verringert. Selbst wenn zu einem gewissen Zeitpunkt ein erfolgreicher Angriff auf ein Produktionssystem stattfindet, so kann nur dasjenige Produktions-Know-How von einem Angreifer abgezogen werden, das laut Produktionsplanung aktuell in der Produktion benötigt wird.

Zusammengefasst besteht ein Aspekt der Erfindung besteht darin, dass der Zugriff auf sensible Daten, die Produktionsbefähigungsdaten, zugriffsgeschützt erfolgt, sodass nur ein Zugriff auf die tatsächlich erforderlichen Produktionsbefähigungsdaten möglich ist.

Anders ausgedrückt besteht die Kernidee der Erfindung in einer Ausführungsform darin, bei einem Berechtigungsverwaltungssystem, insbesondere einem Enterprise-Rights-Management-System (ERM-System), den jeweils aktuellen Stand in der Produktion bzw. der Produktionsplanung als Zugriffskriterium zu berücksichtigen. Die Berechtigungsinformation, insbesondere ein kryptographischer Schlüssel zum Entschlüsseln ERMgeschützter Produktionsbefähigungsdaten (z.B. eine Rezeptur oder ein Container-Image einer virtualisierten Automatisierungsfunktion), wird nur dann bereitgestellt, wenn dies für die Produktion gemäß dem Stand der Produktion und/oder der Planung der Produktion aktuell erforderlich ist.

Die Durchführung der Produktion ist auch als Ausführung der Produktion bezeichenbar.

Die entschlüsselten Produktionsbefähigungsdaten sind erfindungsgemäß ausgebildet, eine Durchführung der Produktion zu befähigen. Dazu werden die verschlüsselten Produktionsbefähigungsdaten entschlüsselt, bevor sie die Durchführung der Produktion befähigen. Das Befähigen der Produktion umfasst ein Steuern des Vorgangs der Produktion und/oder ein Überwachen des Vorgangs der Produktion inklusive eines möglichen Eingreifens in den Ablauf der Produktion.

In einer Weiterbildung der Erfindung ist die Berechtigungsinformation ausgebildet als:
- ein kryptographischer Schlüssel und/oder
- eine kryptographische Berechtigungsinformation und/oder
- eine Berechtigungsdatenstruktur.

Die Berechtigungsinformation ist erfindungsgemäß für ein Entschlüsseln der verschlüsselten Produktionsbefähigungsdaten ausgebildet. Nur wenn eine den verschlüsselten Produktionsbefähigungsdaten zugeordnete Berechtigungsinformation vorliegt, ist eine Entschlüsselung der verschlüsselten Produktionsbefähigungsdaten durchführbar. Durch die Entschlüsselung unter Nutzung der Berechtigungsinformation werden entschlüsselte Produktionsbefähigungsdaten bereitgestellt beziehungsweise ermittelt.

In einer weiteren Weiterbildung der Erfindung sind die verschlüsselten Produktionsbefähigungsdaten und/oder die entschlüsselten Produktionsbefähigungsdaten ausgebildet als:
- eine Steueranweisung und/oder
- eine Steuerfunktion und/oder
- Rezepturdaten und/oder
- Projektierungsdaten und/oder
- eine virtualisierte Automatisierungsfunktion und/oder
- ein Container-Image und/oder
- ein Virtual-Machine-Image und/oder
- eine Binary.

Die entschlüsselten Produktionsbefähigungsdaten sind erfindungsgemäß ausgebildet, eine Durchführung der Produktion zu befähigen.

In einer weiteren Weiterbildung der Erfindung ist die Berechtigungseinheit ausgebildet, die Berechtigungsinformation außerdem in Abhängigkeit einer Komponenteninformation bereitzustellen, wobei die Komponenteninformation eine für die Durchführung der Produktion befähigte Komponente betrifft.

Die für die Durchführung der Produktion befähigte Komponente ist insbesondere ausgebildet als:
- eine Automatisierungskomponente und/oder
- ein Steuergerät und/oder
- eine Ausführungsumgebung zur Ausführung der entschlüsselten Produktionsbefähigungsdaten, insbesondere von virtualisierten Automatisierungsfunktionen.

Die für die Durchführung der Produktion befähigte Komponente, insbesondere die Automatisierungskomponente, weist eine ERM-Funktionalität (Enterprise-Rights-Management-Funktionalität) auf, die es ihr ermöglicht, bereitgestellte verschlüsselte Produktionsbefähigungsdaten, insbesondere ERM-geschützte Produktionsdaten, zu entschlüsseln.

Zugehörig zu dieser Ausführungsform ist die Empfangseinheit außerdem insbesondere ausgebildet, die Information zu der für die Durchführung der Produktion befähigten Komponente zu empfangen.

In einer weiteren Weiterbildung der Erfindung ist die Komponenteninformation ausgebildet als:
- eine Integritätsinformation und/oder
- eine Attestierungsfunktion und/oder
- eine Nutzerinformation und/oder
- eine Bedienpersonalinformation und/oder
- eine Geräteinformation und/oder
- eine Software-Information und/oder
- eine App-Information
jeweils der für die Durchführung der Produktion befähigten Komponente.

Die Berechtigungsinformation und deren Bereitstellung beziehen sich somit insbesondere auch auf Nutzer, d.h. auf Maschinen, Geräte, Software-Prozesse oder auf menschliche Nutzer, insbesondere Bedienpersonal.

Weiterhin wird vorgeschlagen, dass die Berechtigungsinformation nur dann bereitgestellt wird, wenn für die entsprechende für die Durchführung der Produktion befähigte Komponente, insbesondere ein Gerät, eine aktuelle, zulässige Integritätsinformation, auch als Integritäts-Bestätigung oder Compliance-Bestätigung bezeichenbar, vorliegt. Die Integritätsinformation ist vorzugsweise eine kryptographisch geschützte Bestätigung der Geräte-Integrität, d.h. eine Geräteintegritäts-Attestierung.

In einer weiteren Weiterbildung der Erfindung ist die Komponenteninformation ausgebildet als:
- eine von einer Komponentenrichtlinie abhängige Information und/oder
- eine von der Produktionsinformation abhängige Information.

Die Komponentenrichtlinie ist auch als eine Policy der für die Durchführung der Produktion befähigten Komponente bezeichenbar.

Somit gilt insbesondere, dass wann die für die Durchführung der Produktion befähigte Komponente als integer beziehungsweise als konform (engl. compliant) mit der Komponentenrichtlinie und damit als zulässig gilt, die dieser Komponente bereitgestellte Berechtigungsinformation über die Produktionsinformation und/oder die Komponentenrichtlinie ebenfalls von dem Stand der Produktion und/oder der Planung der Produktion abhängt. Somit muss die für die Durchführung der Produktion befähigten Komponente integer beziehungsweise konform mit der Komponentenrichtlinie sein. Welche Eigenschaften sie dazu konkret erfüllen muss, hängt über die Produktionsinformation von der Produktionsplanung ab. Dadurch kann abhängig vom Produktionsauftrag oder dem aktuell anstehenden Produktionsschritt unterschieden werden, was konkret eine jeweilige integere beziehungsweise konforme Gerätekonfiguration ausmacht.

Die Komponentenrichtlinie, auch als Geräteintegritäts-Policy bezeichenbar, legt insbesondere fest, welche Kriterien ein Gerät erfüllen muss, um als integer beziehungsweise konform zu gelten, abhängig von der Produktionsinformation und damit vom aktuell durchgeführten oder durchzuführenden Produktionsauftrag und/oder Produktionsschritt sein. D.h. dass spezifisch für einen Produktionsauftrag und/oder Produktionsschritt festgelegt sein kann, was ein integrer beziehungsweise konformer und damit zulässiger Gerätezustand ist.

In einer weiteren Weiterbildung der Erfindung weist die Berechtigungseinheit auf:
- einen Berechtigungsserver und/oder
- ein Identity and Access Management System und/oder
- einen Schlüsselserver.

Das Identity and Access Management System ist auch als IAM-System bezeichenbar.

Der Berechtigungsserver und/oder das Identity and Access Management System und/oder der Schlüsselserver sind insbesondere ausgebildet, die Berechtigungsinformation zu speichern und/oder bereitzustellen.

In einer weiteren Weiterbildung der Erfindung ist das Berechtigungsverwaltungssystem ausgebildet als:
- ein Enterprise-Rights-Management-System und/oder
- ein Gerät und/oder
- ein Anwendungsprogramm und/oder
- ein Service.

Das Enterprise-Rights-Management-System ist auch als ERM-System bezeichenbar.

In einer weiteren Weiterbildung der Erfindung weist das Berechtigungsverwaltungssystem außerdem auf:
- eine Sendeeinheit, ausgebildet die Berechtigungsinformation an die für die Durchführung der Produktion befähigte Komponente zu senden.

In einer weiteren Weiterbildung der Erfindung ist die Berechtigungseinheit außerdem ausgebildet, die Berechtigungsinformation während der Produktion anzupassen.

Während der Produktion anzupassen, umfasst insbesondere ein dynamisches und/oder von der Produktionsplanung abhängiges Anpassen und Bereitstellen.

Die Erfindung umfasst außerdem ein System aufweisend:
Berechtigungsverwaltungssystem nach einem der vorhergehenden Ansprüche und
- eine Produktionsbefähigungseinheit, ausgebildet die Produktion anhand der entschlüsselten Produktionsbefähigungsdaten zu befähigen.

Die Produktionsbefähigungseinheit ist insbesondere als Compute-Plattform ausgebildet. Die Produktionsbefähigungseinheit ist insbesondere ausgebildet, die verschlüsselten Produktionsbefähigungsdaten mittels der Berechtigungsinformation zu entschlüsseln.

In einer Weiterbildung der Erfindung weist das erfindungsgemäße System außerdem auf:
Ein Produktionsplanungssystem, ausgebildet die Produktionsinformation bereitzustellen,
- eine Datenspeichereinheit, ausgebildet die verschlüsselten Produktionsbefähigungsdaten bereitzustellen, und
- mindestens eine für die Durchführung der Produktion befähigten Komponente, ausgebildet die Produktion anhand der entschlüsselte Produktionsbefähigungsdaten durchzuführen.

Das Berechtigungsverwaltungssystem ist insbesondere über eine Schnittstelle, ein REST-Interface, mit dem Produktionsplanungssystem verbunden. Über die Schnittstelle wird die Produktionsinformation abgefragt und/oder empfangen.

Die für die Durchführung der Produktion befähigten Komponente ist insbesondere als eine Automatisierungskomponente ausgebildet.

Die Datenspeichereinheit ist insbesondere ausgebildet als:
- ein Dateisystem und/oder
- ein Dokumentenserver und/oder
- eine Cloud-Speichereinheit.

Auf der Datenspeichereinheit liegen die verschlüsselten Produktionsbefähigungsdaten, insbesondere Produktionsdokumente, in verschlüsselter Form vor. Ein Nutzer bzw. das von ihm verwendete Programm erhält den Schlüssel, d.h. die Berechtigungsinformation, zum Entschlüsseln/Verschlüsseln der verschlüsselten Produktionsbefähigungsdaten nur, wenn der Nutzer gemäß Produktionsplanung Zugriff auf diese benötigt. Der Nutzer kann dabei ein menschlicher Nutzer, ein Gerät oder ein Service (z.B. eine virtualisierte Automatisierungsfunktion oder eine App) sein.

Die Erfindung umfasst außerdem ein Verfahren zum Bereitstellen einer Berechtigungsinformation in Abhängigkeit einer Produktionsinformation,
- ein Empfangen der Produktionsinformation, wobei die Produktionsinformation eine Information zu einem Stand einer Produktion und/oder einer Planung der Produktion umfasst, und
- das Bereitstellen der Berechtigungsinformation in Abhängigkeit der Produktionsinformation,
   wobei die Berechtigungsinformation ausgebildet ist, verschlüsselte Produktionsbefähigungsdaten zu entschlüsseln, wodurch entschlüsselte Produktionsbefähigungsdaten bereitgestellt werden,
   wobei die entschlüsselten Produktionsbefähigungsdaten ausgebildet sind, eine Durchführung der Produktion zu befähigen.

In einer Weiterbildung der Erfindung umfasst das erfindungsgemäße Verfahren den weiteren Schritt:
- Die Durchführung der Produktion anhand der entschlüsselte Produktionsbefähigungsdaten.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

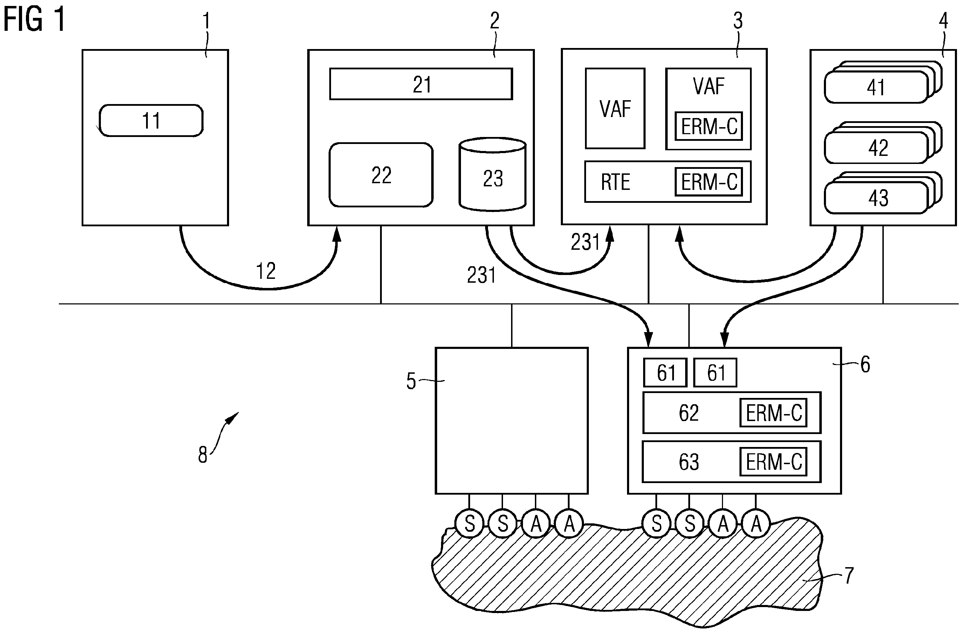

Es zeigt
- Fig. 1: eine schematische Darstellung einer Produktionsumgebung

### DETAILLIERTE BESCHREIBUNG DER ERFINDUNG

Fig. 1 zeigt eine System 8, insbesondere eine Produktionsumgebung 8, mit einer für die Durchführung der Produktion befähigten Komponente 6, insbesondere einer herkömmlichen, Hardware-basierten Automatisierungskomponente 6, auf der Apps 61 ausführbar sind. Diese wirkt über verbundene Sensoren S und Aktuatoren A auf die physikalische Welt 7 ein. Die Hardwarebasierte Automatisierungskomponente 6 verfügt außerdem über eine Edge Laufzeitumgebung 62, auch als Edge RTE 62 bezeichenbar, und eine Kontrollfunktion 63, jeweils mit einem Enterprise-Rights-Management-Client ERM-C.

Auf einer Produktionsbefähigungseinheit 3, insbesondere einem Shopfloor Compute Server 3, werden entschlüsselten Produktionsbefähigungsdaten VAF, insbesondere virtualisierte Automatisierungsfunktionen VAF, von einer Laufzeitumgebung RTE, auch als Runtime Environment RTE bezeichenbar, ausgeführt. Es sind ebenfalls Enterprise-Rights-Management-Client ERM-C vorhanden.

Die entschlüsselten Produktionsbefähigungsdaten VAF (virtualisierte Automatisierungsfunktionen VAF) verwenden entfernte Ein-/Ausgabemodule 5, auch als Remote Input/Output 5 bezeichenbar, um über die damit verbundenen Sensoren S und Aktuatoren A auf die physikalische Welt 7 einzuwirken.

Eine Datenspeichereinheit 4, insbesondere ein File-Server 4 oder eine Datenbank 4, speichert, die verschlüsselten Produktionsbefähigungsdaten 41, 42, 43, d.h. sensible Daten 41, 42, 43 in verschlüsselter Form, d.h. Enterprise-Rights-Management-geschützt (ERM-geschützt). Im dargestellten Ausführungseispiel sind verschlüsselte virtualisierte Automatisierungsfunktionen-Images 41, verschlüsselte App-Images 42 und verschlüsselte Rezepturdaten 43 auf dem File-Server 4 abgelegt.

Ein jeweils für die Verschlüsselung verwendeter kryptographischer Schlüssel 231 ist in einer Enterprise-Rights-Management-Schlüsseldatenbank 23 eines Berechtigungsverwaltungssystem 2, insbesondere eines Produktions-Enterprise-Rights-Management-Systems 2, gespeichert. Vorzugsweise ist jede der verschlüsselten Produktionsbefähigungsdaten 41, 42, 43 jeweils mit einem eigenen kryptographischen Schlüssel verschlüsselt. Es kann dann für jede der verschlüsselten Produktionsbefähigungsdaten 41, 42, 43 jeweils eine zugeordnete Berechtigungsinformation bereitgestellt werden, die eine Entschlüsselung der jeweiligen verschlüsselten Produktionsbefähigungsdaten 41, 42, 43 ermöglicht. Es ist jedoch auch möglich, dass mehrere der verschlüsselten Produktionsbefähigungsdaten 41, 42, 43 mit dem gleichen kryptographischen Schlüssel verschlüsselt sind. Es kann dann eine Berechtigungsinformation bereitgestellt werden, die eine Entschlüsselung der Mehrzahl oder der Vielzahl von verschlüsselten Produktionsbefähigungsdaten ermöglicht. Dies hat den Vorteil einer vereinfachten Schlüsselverwaltung, insbesondere wenn eine Mehrzahl oder Vielzahl von verschlüsselten Produktionsbefähigungsdaten 41, 42, 43 zur Durchführung der Produktion oder eines Produktionsschritts erforderlich sind.

Weiterhin ist ein Produktionsplanungssystem 1 vorgesehen.

Das Produktions-Enterprise-Rights-Management-System 2 enthält einen Enterprise-Rights-Management-Server 21, der anderen Systemen, soweit gemäß einer definierten Enterprise-Rights-Management-Zugriffs-Policy 22, auch als Enterprise-Rights-Management Access Permissions 22 bezeichenbar, erlaubt, einen kryptographischen Schlüssel 231, die Berechtigungsinformation 231, zum Entschlüsseln eines Enterprise-Rights-Managementgeschützten Daten 41, 42, 43 bereitstellt.

Dazu authentisiert sich der Zugreifende (nicht dargestellt) gegenüber dem Enterprise-Rights-Management-Server 21, insbesondere eine Komponente 21 oder ein Software-Prozess 21. Weiterhin kann eine Integritätsinformation (Runtime Health Check Information) der Plattform, von der der Zugriff erfolgt, vom Enterprise-Rights-Management-Server 21 geprüft werden (nicht dargestellt).

Erfindungsgemäß wird dem Produktions-Enterprise-Rights-Management 21 (d.h. dem Enterprise-Rights-Management-Server 21) eine Information zur Produktionsplanung 11 von einem Produktionsplanungssystem 1 bereitgestellt. Diese 11 gibt an, welche Produktionsschritte aktuell durchgeführt werden bzw. werden sollen. Diese Information 11 wird bei der Berechtigungsprüfung durch den ERM-Server 21 ausgewertet, um zu ermitteln, ob gemäß der Produktionsplanungsinformation 11 ein Zugriff auf bestimmte ERM-geschützte Daten 41, 42, 43 erforderlich bzw. zulässig ist, und durch welche Komponente 6. Davon abhängig wird einer Komponente 6 (bzw. deren Enterprise-Rights-Management-Client ERM-C) ein Enterprise-Rights-Management-Schlüssel 231 zum Entschlüsseln der Enterprise-Rights-Management-geschützten Daten 41, 42, 43 bereitgestellt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

**1.** Berechtigungsverwaltungssystem,
aufweisend:
- eine Empfangseinheit, ausgebildet eine Produktionsinformation zu empfangen, wobei die Produktionsinformation eine Information zu einem Stand einer Produktion und/oder einer Planung der Produktion umfasst, und
- eine Berechtigungseinheit, ausgebildet eine Berechtigungsinformation in Abhängigkeit der Produktionsinformation bereitzustellen,
wobei die Berechtigungsinformation für ein Entschlüsseln der verschlüsselten Produktionsbefähigungsdaten ausgebildet ist, wodurch entschlüsselte Produktionsbefähigungsdaten bereitgestellt werden,
wobei die entschlüsselten Produktionsbefähigungsdaten ausgebildet sind, eine Durchführung der Produktion zu befähigen.

**2.** Berechtigungsverwaltungssystem nach Anspruch 1,
wobei die Berechtigungsinformation ausgebildet ist als:
- ein kryptographischer Schlüssel und/oder
- eine kryptographische Berechtigungsinformation und/oder
- eine Berechtigungsdatenstruktur.

**3.** Berechtigungsverwaltungssystem nach einem der vorhergehenden Ansprüche,
wobei die verschlüsselten Produktionsbefähigungsdaten und/oder die entschlüsselten Produktionsbefähigungsdaten ausgebildet sind als:
- eine Steueranweisung und/oder
- eine Steuerfunktion und/oder
- Rezepturdaten und/oder
- Projektierungsdaten und/oder
- eine virtualisierte Automatisierungsfunktion und/oder
- ein Container-Image und/oder
- ein Virtual-Machine-Image und/oder
- eine Binary.

**4.** Berechtigungsverwaltungssystem nach einem der vorhergehenden Ansprüche,
wobei die Berechtigungseinheit ausgebildet ist, die Berechtigungsinformation außerdem in Abhängigkeit einer Komponenteninformation bereitzustellen, wobei die Komponenteninformation eine für die Durchführung der Produktion befähigte Komponente betrifft.

**5.** Berechtigungsverwaltungssystem nach Anspruch 4,
wobei die Komponenteninformation ausgebildet ist als:
- eine Integritätsinformation und/oder
- eine Attestierungsfunktion und/oder
- eine Nutzerinformation und/oder
- eine Bedienpersonalinformation und/oder
- eine Geräteinformation und/oder
- eine Software-Information und/oder
- eine App-Information.
jeweils der für die Durchführung der Produktion befähigten Komponente.

**6.** Berechtigungsverwaltungssystem nach Anspruch 4 oder 5, wobei die Komponenteninformation ausgebildet ist als:
- eine von einer Komponentenrichtlinie abhängige Information und/oder
- eine von der Produktionsinformation abhängige Information.

**7.** Berechtigungsverwaltungssystem nach einem der vorhergehenden Ansprüche,
wobei die Berechtigungseinheit aufweist:
- einen Berechtigungsserver und/oder
- ein Identity and Access Management System und/oder
- einen Schlüsselserver.

**8.** Berechtigungsverwaltungssystem nach einem der vorhergehenden Ansprüche,
ausgebildet als:
- ein Enterprise-Rights-Management-System und/oder
- ein Gerät und/oder
- ein Anwendungsprogramm und/oder
- ein Service.

**9.** Berechtigungsverwaltungssystem nach einem der vorhergehenden Ansprüche,
außerdem aufweisend:
- eine Sendeeinheit, ausgebildet die Berechtigungsinformation an die für die Durchführung der Produktion befähigte Komponente zu senden.

**10.** Berechtigungsverwaltungssystem nach einem der vorhergehenden Ansprüche,
wobei die Berechtigungseinheit außerdem ausgebildet, die Berechtigungsinformation während der Produktion anzupassen.

**12.** System aufweisend:
- Berechtigungsverwaltungssystem nach einem der vorhergehenden Ansprüche und
- eine Produktionsbefähigungseinheit, ausgebildet die Produktion anhand der entschlüsselten Produktionsbefähigungsdaten zu befähigen.

**13.** System nach Anspruch 12,
außerdem aufweisend:
- Ein Produktionsplanungssystem, ausgebildet die Produktionsinformation bereitzustellen,
- eine Datenspeichereinheit, ausgebildet die verschlüsselten Produktionsbefähigungsdaten bereitzustellen, und
- mindestens eine für die Durchführung der Produktion befähigten Komponente, ausgebildet die Produktion anhand der entschlüsselte Produktionsbefähigungsdaten durchzuführen.

**14.** Verfahren zum Bereitstellen einer Berechtigungsinformation in Abhängigkeit einer Produktionsinformation,
- ein Empfangen der Produktionsinformation, wobei die Produktionsinformation eine Information zu einem Stand einer Produktion und/oder einer Planung der Produktion umfasst, und
- das Bereitstellen der Berechtigungsinformation in Abhängigkeit der Produktionsinformation,
wobei die Berechtigungsinformation für ein Entschlüsseln der verschlüsselten Produktionsbefähigungsdaten ausgebildet ist, wodurch entschlüsselte Produktionsbefähigungsdaten bereitgestellt werden,
wobei die entschlüsselten Produktionsbefähigungsdaten ausgebildet sind, eine Durchführung der Produktion zu befähigen.

**15.** Verfahren nach Anspruch 14,
mit dem weiteren Schritt:
- Die Durchführung der Produktion anhand der entschlüsselte Produktionsbefähigungsdaten.
